Europäisches Patentamt

European Patent Office

Office européen des brevets

(19)

(11) Veröffentlichungsnummer : **0 166 334**
**B1**

(12) **EUROPÄISCHE PATENTSCHRIFT**

(45) Veröffentlichungstag der Patentschrift :
**11.10.89**

(21) Anmeldenummer : **85107415.3**

(22) Anmeldetag : **15.06.85**

(51) Int. Cl.⁴ : **A 01 K 29/00**, A 01 K 1/02, A 61 D 17/00

(54) **Vorrichtung zum Verhindern des Totdrückens von Ferkeln in Schweinezuchtbetrieben und deren Verwendung als Anzeige-einrichtung für den Beginn des Geburtsvorganges bei Muttertieren.**

(30) Priorität : 29.06.84 DE 3423934
27.11.84 DE 3443152

(43) Veröffentlichungstag der Anmeldung :
02.01.86 Patentblatt 86/01

(45) Bekanntmachung des Hinweises auf die Patenterteilung : 11.10.89 Patentblatt 89/41

(84) Benannte Vertragsstaaten :
AT BE CH DE FR GB LI NL SE

(56) Entgegenhaltungen :
US–A– 4 145 993
US–A– 4 202 293

(73) Patentinhaber : de Wit, Paulus Alphensus Joseph
Beukenlaan 25
NL-9363 CE Marum (NL)

Bouma, Jitze
Beukenlaan 27
NL-9363 CE Marum (NL)

(72) Erfinder : de Wit, Paulus Alphensus Joseph
Beukenlaan 25
NL-9363 CE Marum (NL)
Erfinder : Bouma, Jitze
Beukenlaan 27
NL-9363 CE Marum (NL) .

(74) Vertreter : Habbel, Hans-Georg, Dipl.-Ing.
Postfach 3429 Am Kanonengraben 11
D-4400 Münster (DE)

EP 0 166 334 B1

**Beschreibung**

Die Erfindung bezieht sich auf eine Vorrichtung zum Verhindern des Totdrückens von Ferkeln in Schweinezuchtbetrieben, in welchen das Muttertier und die Ferkel gemeinsam in einer Abferkelbucht aufgenommen sind.

In Schweinezuchtbetrieben stellt sich immer wieder das Problem, daß die Muttertiere die frischgeworfenen Ferkel erdrücken können, wenn sich die häufig sehr schweren Muttertiere hinlegen oder sich aus ihrer Liegestellung in eine andere Liegestellung bewegen. Bisher sind erhebliche konstruktive Aufwendungen gemacht worden, um dieses Erdrücken der Ferkel zu verhindern, wobei diese Konstruktionen als sogenannte Ferkelschutzkäfige bekanntgeworden sind. Trotz dieser Ferkelschutzkäfige kann es immer wieder vorkommen, insbesondere in den ersten drei bis sechs Tagen nach der Geburt, daß die Ferkel unter die sich bewegenden Muttertiere gelangen.

So ist beispielsweise aus der US-A-41 45 993 eine Anordnung bekanntgeworden, bei welcher dann, wenn das Muttertier sich hinlegt, ein separater Käfig für die Ferkel geöffnet wird, so daß die Ferkel Zugang zu den Zitzen des Muttertieres haben. Erhebt sich das Muttertier wieder, werden die Ferkel in ihren eigenen Ferkelkäfig zurückgeschleudert. Abgesehen davon, daß dieses System dann nicht funktioniert, wenn beispielsweise das Muttertier anstatt sich hinzulegen, in aufrechter Stellung auf den Auslösehebel für die Verschlußklappe für den eigentlichen Ferkelkäfig tritt, hat dieses System weiterhin den Nachteil, daß dann, wenn sich das Muttertier in einer Liegestellung befindet, die Ferkel also Zugang zu den Zitzen des Muttertieres haben und sich nun das Muttertier umdreht, also liegenbleibt, das Erdrücken der Ferkel stattfinden kann. Auch dieses System hat sich in der Praxis nicht bewährt.

Man hat das Problem auch dadurch versucht zu lösen daß man in einer Abferkelbucht in vom Muttertier entfernten Bereichen Wärmequellen geschaffen hat, die die Ferkel veranlassen sollten, sich vom Muttertier weg zu diesen Wärmebereichen zu bewegen und in diesen Wärmebereich aufzuhalten. Das ist teilweise gelungen, aber da die Ferkel natürlich auch an der Mutter saugen wollen und ohne jede Frage auch vom Geruch der Mutter angezogen werden, sind auch diese Maßnahme nur teilweise zufriedenstellend.

Großräumige Untersuchungen haben im EWG-Raum ergeben, daß grundsätzlich in Ferkelzuchtbetrieben, die mit den besten, heute bekannten Schutzvorrichtungen ausgerüstet sind, immer noch 6,2 % Verluste durch Erdrücken der Ferkel auftreten.

Der Erfindung liegt daher die Aufgabe zugrunde, eine Vorrichtung zu schaffen, die es dem Züchter ermöglicht, auch diesen noch recht erheblichen Verlustanteil zu vermindern.

Zur Lösung dieser Aufgabe dienen die im kennzeichnenden Teil des Patentanspruches 1 genannten Merkmale.

Vorteilhafte Ausgestaltungen der Vorrichtung nach Patentanspruch 1 sind in den Unteransprüchen enthalten.

Die Erfindung geht von der Überlegung und Erkenntnis aus, daß dann, wenn ein Ferkel unter ein Muttertier gelangt, das Ferkel durch das Auspressen der Luft aus der Lunge einen bestimmten Schrei ausstößt bzw. bestimmte Geräusche abgibt, die bei Schweinezüchtern als der sogenannte « Ferkeltodesschrei » bekannt sind.

In kleineren, insbesondere bäuerlichen Betrieben, konnte dann wenn sich der Züchter oder Bauer im Stall aufhielt dieser Züchter auf diesen Todesschrei reagieren und das Muttertier veranlassen, sich von dem Ferkel wegzubewegen. In großen Zuchtanlagen ist dies jedoch heute nicht mehr möglich.

Gemäß der Erfindung wird daher ein Geräuschdetektor eingesetzt, der aus einer Fülle der in einem Schweinezuchtstall auftretenden Geräusche nur auf ein bestimmtes Geräusch reagiert, d. h. eine bestimmte Frequenz des Geräuschdetektors wird als Steuerungsfrequenz eingesetzt. Die Geräusche werden durch entsprechende Mikrofone aufgenommen, dem Geräuschdetektor aufgegeben und sobald die ihm eingegebene Geräuschfrequenz auftritt, löst dieser Geräuschdetektor einen elektrischen Impuls aus, der eine entsprechende Warnanlage steuert.

Praktische Versuche haben gezeigt, daß in der Praxis der Geräuschdetektor mit einer Kupfermatte verbunden werden kann, die im Liegebereich des Muttertieres angeordnet ist. Bei Auslösen des Warnimpulses durch den Geräuschdetektor wird in dieser Matte ein Stromschlag freigegeben, der das Muttertier unverzüglich zwingt aufzustehen oder sich umzudrehen, so daß dadurch das Ferkel möglicherweise vor dem Erdrücken gerettet ist.

Gemäß der Erfindung ist es möglich, einen Geräuschdetektor für mehrere Abferkelbuchten einzusetzen oder für jede einzelne Abferkelbucht einen eigenen Geräuschdetektor vorzusehen. Weiterhin ist es gemäß der Erfindung möglich, ein oder mehrere Mikrofone pro Abferkelbucht einzusetzen oder auch ein Mikrofon für eine Vielzahl von Abferkelbuchten vorzusehen.

Der vom Geräuschdetektor erzeugte Warnimpuls kann nicht nur zum Muttertier geführt werden, sondern es ist auch möglich, diesen Warnimpuls auch zum Überwachungspersonal für den Stall zu führen, so daß dieses Überwachungspersonal sofort reagieren kann, wobei mit dem erzeugten Impuls gleichzeitig eine Anzeige erfolgen kann, in welchem der ggf. mehreren Abferkelbuchten ein Problem auftritt. Hierbei ist es natürlich möglich, sowohl den Impuls zum Muttertier wie auch zur Überwachungsperson gleichzeitig zu leiten. Anstelle des erzeugten Stromstoßes ist es auch möglich, das Muttertier durch eine durch den Warnimpuls initiierte Blitzlichtlampe zu motivieren.

Die Erfindung sieht weiterhin vor, daß die Verbindung zwischen den Mikrofonen und dem Geräuschdetektor und/oder die Verbindung zwischen dem Geräuschdetektor und der Warnanlage nicht mehr über eine Verkabelung erfolgt, sondern über Radiowellen, so daß der Installationsaufwand erheblich vermindert wird und gleichzeitig die Fehlerquellenmöglichkeit möglichst gering gehalten wird.

Weiterhin wird vorgeschlagen, einen Gurt vorzusehen, der vom Muttertier getragen wird und der eine größere Sicherheit zur Übertragung des Warnimpulses gibt. Auch wird der Installationsaufwand durch eine solche Anordnung verringert.

Anstelle des Gurtes können auch andere, vom Tier selbst getragene Warneinrichtungen vorgesehen werden, wie beispielsweise kleine Empfänger, die am Tier befestigt werden.

Da sich herausgestellt hat, daß die Tiere sehr unterschiedlich auf die ausgelösten Warnimpulse reagieren, wird gemäß der Erfindung weiterhin vorgeschlagen, daß die Schockintensität der Warnanlage regelbar ist, so daß in Anpassung an die individuelle Konstitution eines Muttertieres der entsprechende Schock ausgewählt werden kann.

Auch wird vorgeschlagen, den Geräuschdetektor mit einer Zählanlage für die von ihm zur Warnanlage abgegebenen Impulse auszurüsten.

Schließlich wird gemäß der Erfindung vorgeschlagen, daß die eingesetzten Mikrofone hinsichtlich ihrer Aufnahmeempfindlichkeit einregelbar sind, so daß auch hier Anpassungen an die verschiedenen Stallverhältnisse ohne Schwierigkeiten auch von einem Laien vorgenommen werden können.

Während im voraufgehenden die Problematik anhand eines Abferkelkäfigs erläutert wurde, liegt es auch im Bereich der Erfindung, eine solche Vorrichtung auch für kurz vor der Entbindung stehende Muttertiere zu verwenden, so daß der den Stall Überwachende in die Lage versetzt wird, beispielsweise bei großen Rinderzuchtanlagen, über den Zeitpunkt der Geburt informiert zu werden, so daß er zu diesem Zeitpunkt hilfeleistend zur Verfügung stehen kann. Es hat sich nämlich herausgestellt, daß Tiere vor der Geburt bestimmte Geräusche abgeben, die unverwechselbar auf das bevorstehende Geburtsereignis hinweisen.

Ein Ausführungsbeispiel der Erfindung in Verbindung mit einem Abferkelstall wird nachfolgend anhand der Zeichnung erläutert. In der Zeichnung zeigt

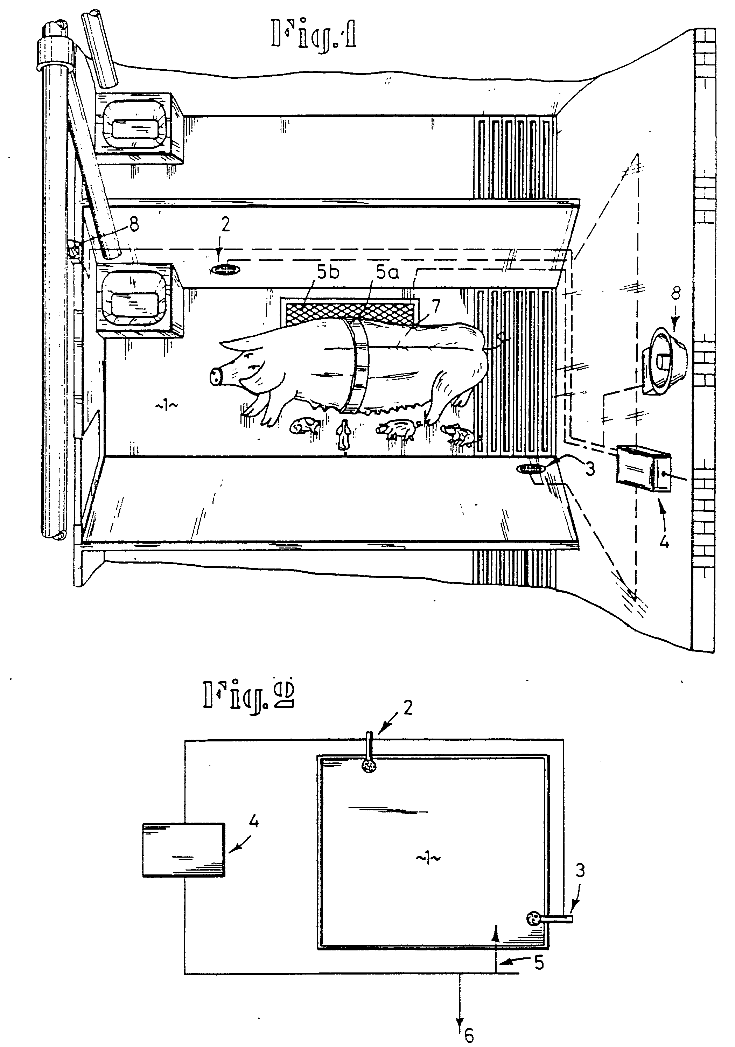

Fig. 1 eine schaubildliche Ansicht von oben auf einen Abferkelkäfig und in

Fig. 2 eine Schemaskizze zur Verdeutlichung der Erfindung.

In der Zeichnung ist mit 1 eine Abferkelbucht bezeichnet, der zwei Mikrofone 2 und 3 zugeordnet sind. Die Mikrofone 2 und 3 sind mit einem Geräuschdetektor 4 verbunden, der aus den von den Mikrofonen 2 und 3 aufgenommenen Geräuschen nur das Geräusch herausfiltert, auf das er eingestellt ist, wobei dann, wenn dieses Geräusch eintritt, vom Geräuschdetektor 4 ein elektrischer Impuls ausgeht, der zu einer Warnanlage 5 führt.

Diese Warnanlage 5 kann als Gurt 5a vom Tier 7 getragen werden oder besteht aus einer im Liegeflächenbereich des Muttertieres 7 angeordneten elektrisch leitenden und bei Betätigung einen elektrischen Stromstoß abgebenden Matte 5b.

Der Geräuschdetektor 4 kann zusätzlich mit einem Abzweig 6 versehen sein, der im Gegensatz zur Warnanlage 5 nicht zum Tier 7, sondern zu einer Warneinrichtung 8 für die Überwachungsperson für den Stall führt, z. B. einen Lautsprecher oder eine Warnlampe.

Die Verbindung zwischen dem oder den Mikrofonen 2, 3 und dem Geräuschdetektor 4 und/oder die Verbindung zwischen dem Detektor 4 und der Warnanlage 5 kann drahtlos, z. B. über Radiowellen, erfolgen oder auch durch entsprechende elektrische Stromleitungen.

Da die größte Gefahr für das Erdrücken der Ferkel in den ersten sechs Tagen besteht, braucht die gesamte Anlage nur in diesem Zeitraum in Tätigkeit gesetzt zu werden und kann ggf. dadurch für mehrere Abferkelbuchten einsetzbar sein.

**Patentansprüche**

1. Vorrichtung zum Verhindern des Totdrückens von Ferkeln in Schweinezuchtbetrieben, in welchen das Muttertier und die Ferkel gemeinsam in einer Abferkelbucht aufgenommen sind, gekennzeichnet durch wenigstens ein der Abferkelbucht (1) zugeordnetes Mikrofon (2, 3), einen mit dem Mikrofon verbundenen Geräuschdetektor (4), der bei Einspeisung eines einem eingespeicherten Vergleichsschallsignal -entsprechenden Schallsignals einen elektrischen Impuls auslöst und eine durch den vom Geräuschdetektor (4) ausgelösten Impuls wirksam werdende Warnanlage (5).

2. Vorrichtung nach Anspruch 1, dadurch gekennzeichnet, daß die Verbindung zwischen dem oder den Mikrofonen (2, 3) und dem Geräuschdetektor (4) und/oder die Verbindung zwischen dem Detektor (4) und der Warnanlage (5) drahtlos, d. h. über Radiowellen, erfolgt.

3. Vorrichtung nach Anspruch 1, dadurch gekennzeichnet, daß die Warnanlage (5) durch eine im Liegeflächenbereich des Muttertieres angeordnete, elektrisch leitende und bei Betätigung einen elektrischen Stromstoß abgebende Matte gebildet ist.

4. Vorrichtung nach Anspruch 1, dadurch gekennzeichnet, daß die Warnanlage (5) durch einen vom Muttertier getragenen, elektrisch leitfähigen Gurt gebildet wird, der bei Abgabe des Impulses durch den Geräuschdetektor (4) einen elektrischen Stromstoß auslöst.

5. Vorrichtung nach Anspruch 1, dadurch gekennzeichnet, daß die Warnanlage (5) als im Liegebereich des Muttertieres angeordnete Blitzlichtlampe ausgebildet ist.

6. Vorrichtung nach Anspruch 1, dadurch gekennzeichnet, daß die Warnanlage im Bereich der mit der Überwachung des Stalles beauftragenden Bedienungsperson angeordnet ist.

7. Vorrichtung nach einem der vorhergehenden Ansprüche, dadurch gekennzeichnet, daß der Geräuschdetektor (4) mehreren Abferkelbuchten (1) zugeordnet ist.

8. Vorrichtung nach einem der vorhergehenden Ansprüche, dadurch gekennzeichnet, daß der Geräuschdetektor (4) mit einer Zählanlage für die von ihm zur Warnanlage (5) abgegebenen Impulse ausgerüstet ist.

9. Vorrichtung nach Anspruch 1, dadurch gekennzeichnet, daß die Aufnahmeempfindlichkeit des oder der Mikrofone den örtlichen Verhältnisse anpaßbar einstellbar ist.

10. Vorrichtung nach Anspruch 1, dadurch gekennzeichnet, daß die Schockintensität der Warnanlage regelbar ist.

11. Vorrichtung nach Anspruch 4, dadurch gekennzeichnet, daß anstelle des Gurtes andere vom Tier getragene, auf den vom Geräuschdetektor abgegebenen Impuls reagierende Warnanlagen vorgesehen sind.

12. Verwendung der Vorrichtung nach einem der Ansprüche 1 und 6 bis 11 als Anzeigeeinrichtung für den Beginn des Geburtsvorganges bei Muttertieren, die kurz vor dem Werfen des Nachwuchses stehen.

## Claims

1. Device for preventing the crushing of piglets on pig-breeding farms, in which the mother animal and the piglets are housed together in a farrowing pen, characterized by at least one microphone (2, 3) which is assigned to the farrowing pen (1), a noise detector (4) which is connected to the microphone and releases an electric pulse whenever a sound signal corresponding to a stored comparison sound signal is fed in, and a warning system (5) which is brought into action by the pulse released by the noise detector (4).

2. Device according to Claim 1, characterized in that the connection between the microphone or microphones (2, 3) and the noise detector (4) and/or the connection between the detector (4) and the warning system (5) is wireless, i. e. via radio waves.

3. Device according to Claim 1, characterized in that the warning system (5) is formed by an electrically conductive mat which is arranged in the area where the mother animal lies and emits an electric current surge when actuated.

4. Device according to Claim 1, characterized in that the warning system (5) is formed by an electrically conductive belt which is worn by the mother animal and triggers an electric current surge when the pulse is emitted by the noise detector (4).

5. Device according to Claim 1, characterized in that the warning system (5) is designed as a photoflash lamp which is arranged in the area where the mother animal lies.

6. Device according to Claim 1, characterized in that the warning system is arranged in the proximity of the person entrusted with supervision of the stall.

7. Device according to one of the preceding claims, characterized in that the noise detector (4) is assigned to a plurality of farrowing pens (1).

8. Device according to one of the preceding claims, characterized in that the noise detector (4) is equipped with a counting system for the pulses emitted by it to the warning system (5).

9. Device according to Claim 1, characterized in that the pick-up sensitivity of the microphone or microphones can be adjusted to adapt to local conditions.

10. Device according to Claim 1, characterized in that the shock intensity of the warning system is controllable.

11. Device according to Claim 4, characterized in that, instead of the belt, other warning systems which are worn by the animal and respond to the pulse emitted by the noise detector are provided.

12. Use of the device according to one of Claims 1 and 6 to 11 as a display device for the beginning of parturition in mother animals which are just about to give birth.

## Revendications

1. Dispositif pour éviter l'écrasement des porcelets dans des porcheries, dans lesquelles la mère et les porcelets sont logés ensemble dans une stalle de mise bas, caractérisé par au moins un microphone (2, 3) affecté à la stalle de mise bas, par un détecteur de bruit (4) relié au microphone qui, lors de l'arrivée d'un signal acoustique correspondant à un signal acoustique de comparaison mémorisé, déclenche une impulsion électrique et par une installation d'avertissement (5) rendue active par l'impulsion déclenchée par le détecteur de bruit.

2. Dispositif selon la revendication 1, caractérisé en ce que la liaison entre le ou les microphones (2, 3) et le détecteur de bruit (4) et /ou la liaison entre le détecteur (4) et l'installation d'avertissement (5) est établie sans fil, à savoir au moyen d'ondes radioélectriques.

3. Dispositif selon la revendication 1, caractérisé en ce que l'installation d'avertissement (5) est constituée par une natte disposée dans la zone de repos de la mère, qui conduit le courant électrique et émet un appel de courant lorsqu'elle est activée.

4. Dispositif selon la revendication 1, caractérisé en ce que l'installation d'avertissement (5) est constituée par une ceinture conductrice du courant électrique portée par la mère, qui déclenche un appel de courant électrique lorsqu'une impulsion est émise par le détecteur de bruit (4).

5. Dispositif selon la revendication 1, caractérisé en ce que l'installation d'avertissement (5) est constituée par une lampe-éclair disposée dans la zone de repos de la mère.

6. Dispositif selon la revendication 1, caractérisé en ce que l'installation d'avertissement est disposée dans la zone de perception de la personne de service chargée de la surveillance de la porcherie.

7. Dispositif selon une des revendications qui précèdent, caractérisé en ce que le détecteur de bruit (4) est affecté à plusieurs stalles de mise bas (1).

8. Dispositif selon une des revendications qui précèdent, caractérisé en ce que le détecteur de bruit (4) est équipé d'une installation de comptage des impulsions qu'il émet vers l'installation d'avertissement (5).

9. Dispositif selon la revendication 1, caractérisé en ce que la sensibilité de réception du ou des microphones peut être réglée avec adaptation aux conditions locales.

10. Dispositif selon la revendication 1, caractérisé en ce que l'intensité des chocs émis par l'installation d'avertissement est réglable.

11. Dispositif selon la revendication 4, caractérisé en ce que il est prévu, au lieu de la ceinture, d'autres installations d'avertissement portées par l'animal, qui réagissent à l'impulsion émise par le détecteur de bruit.

12. Utilisation du dispositif d'après une des revendications 1 et 6 à 11 comme dispositif de signalisation du début du processus de naissance pour les mères qui sont sur le point de mettre bas leur progéniture.

Fig.1

Fig.2

1